# EUROPÄISCHE PATENTSCHRIFT

(11) **EP 3 182 383 B1**
(45) Veröffentlichungstag und Bekanntmachung des Hinweises auf die Patenterteilung: **05.02.2025**
(21) Anmeldenummer: 16202903.7
(22) Anmeldetag: 08.12.2016
(51) Int. Cl.: G07C 3/00, G01D 4/00, H04L 9/40, H04Q 9/00

(54) **DATENSAMMLUNG MIT HYBRIDEM SICHERHEITSMODUS**
DATA COLLECTION UTILIZING HYBRID SECURITY MODE
COLLECTE DE DONNÉES AVEC MODE DE SÉCURITÉ HYBRIDE

(30) Priorität: 16.12.2015 CH 18442015
(43) Veröffentlichungstag der Anmeldung: 21.06.2017
(73) Patentinhaber: Landis+Gyr AG, 6330 Cham (CH)
(72) Erfinder: BUHOLZER, Franz, 6048 Horw (CH); HAAS, Jürg, 6343 Rotkreuz (CH)
(74) Vertreter: Marks & Clerk LLP

(56) Entgegenhaltungen:
- DE-A1- 102013 205 091
- DE-A1- 102014 102 007
- US-A1- 2014 207 854
- US-A1- 2015 101 016
- "RSA laboratories technical note: Cryptographic message syntax standard, version 1.5", RSA LABORATORIES TECHNICAL NOTE, XX, XX, 1 November 1993 (1993-11-01), pages 1 - 30, XP002952160
- MELEK ÖNEN ET AL: "Secure Data Aggregation with Multiple Encryption", 29 January 2007, WIRELESS SENSOR NETWORKS; [LECTURE NOTES IN COMPUTER SCIENCE;;LNCS], SPRINGER BERLIN HEIDELBERG, BERLIN, HEIDELBERG, PAGE(S) 117 - 132, ISBN: 978-3-540-69829-6, XP019076931
- LANDIS + GYR: "Gridstream Solution Security Overview White Paper", 2 July 2015 (2015-07-02), XP055294214, Retrieved from the Internet <URL:http://eu.landisgyr.com/gridstream-solution-security> [retrieved on 20160808]

## Beschreibung

Die vorliegende Erfindung betrifft eine Messinfrastruktur, insbesondere intelligente Messinfrastruktur zum Sammeln von durch eine Vielzahl von Endgeräten generierten Messdaten mit wenigstens einer Datensammelvorrichtung, die als Datenkonzentrator konfiguriert ist, und wenigstens einem Kopfendsystem, wobei die Endgeräte, die wenigstens eine Datensammelvorrichtung und das wenigstens eine Kopfendsystem durch Betriebsnachrichten miteinander kommunizieren, gemäss dem Oberbegriff des Anspruchs 1.

### Technologischer Hintergrund

Zur Erfassung von Verbrauchsdaten und zur Steuerung von Abnehmern elektrischer Energie, Gas, Wasser, o. ä., werden zunehmend digitalisierte intelligente Messinfrastrukturen (engl. Advanced Metering Infrastructures - AMI) eingesetzt. Derartige Messinfrastrukturen umfassen digitale intelligente Zähler (engl. Smart Meter) als Endgeräte (engl. End-Device - ED), die an den Verbrauchsstellen Messdaten aufnehmen. Die Messdaten werden von den Endgeräten auf digitalem Wege an sogenannte Kopfendsysteme (engl. Head-End-System - HES) übertragen, welche die Verbrauchsdaten verwalten und die Endgeräte steuern.

Da eine intelligente Messinfrastruktur eine grosse Vielzahl - bis zu Millionen - von Endgeräten umfassen kann, ist eine gleichzeitige direkte Kommunikationsverbindung von allen Endgeräten zum Kopfendsystem oft nicht herstellbar, weil dazu zur Verfügung stehende Kommunikationsmittel nicht ausreichen, insbesondere Bandbreiten zu gering sind. Um dennoch von den Endgeräten erfasste und versendete Daten möglichst sicher und verlustfrei an das Kopfendsystem übertragen zu können, werden Datensammelvorrichtungen, sogenannte Datenkonzentratoren (engl. Data Concentrator - DC), eingesetzt.

Die Datensammelvorrichtungen sind auf einem Kommunikationsweg zwischen den Endgeräten und dem Kopfendsystem angeordnet. Sie sammeln von den Endgeräten versendete Verbrauchsdaten und nehmen eine Art Zwischenspeicherung vor, bis die von ihnen zwischengespeicherten Daten vom Kopfendsystem abgerufen werden. Auch können die Datensammelvorrichtungen in weitere Kommunikationsaufgaben involviert sein, wie beispielsweise Statusabfragen bei den Endgeräten vorzunehmen und diese mit Informationen und Programmcodes, wie beispielsweise Kommunikationszeitpläne, Software- oder Firmware-Updates, zu versorgen.

Sowohl die Verbrauchs- als auch die Betriebsdaten sind meist Vertraulich und unterliegen somit gewissen Sicherheitsanforderungen. Gemäss diesen Sicherheitsanforderungen kann insbesondere vorgesehen sein, dass Verbrauchsdaten innerhalb der Messinfrastruktur verschlüsselt versendet und gehandhabt haben, um einen unbefugten Zugriff auf die Verbrauchsdaten zu verhindern. Allgemeine Sicherheitsanforderungen sowie sonstige Spezifikationen für Kommunikationsabläufe in Messinfrastrukturen sind beispielsweise im IEC-Standard Nr. 52056-5-3 Ed.3.0 (Specification for Energy Metering) der International Electrotechnical Commission (IEC) festgehalten.

Für sehr sensible Daten können besondere Sicherheitsanforderungen vorgesehen sein, wie beispielsweise eine End-zu-End-Verschlüsselung zwischen Kopfendsystem und Endgeräten, so dass nur diese die sehr sensiblen Daten interpretieren können. Dies kann insbesondere beim Einsatz von Datensammelvorrichtungen problematisch sein. Die Datensammelvorrichtungen besitzen nämlich einen grösseren Funktionsumfang als beispielsweise einfache Protokollumsetzer (engl. Gateways) und sind dazu in der Lage, gewisse Datenmengen zwischenzuspeichern und zu interpretieren. Zudem können sie grundsätzlich einen Fern- und/oder Nahzugriff auf die Daten durch Bedienpersonal zulassen. Folglich sind die von den Datensammelvorrichtungen gehandhabten Daten besonders stark vor unbefugtem Zugriff zu schützen.

Verfahren zur sicheren Kommunikation zwischen Kopfendsystemen und Endgeräten sind in DE 10 2014 102 007 Al, DE 10 2013 205 091 Al, US 2015/0101016 Al, US 2014 0207854 Al und Landis + Gyr: «Gridstream Solution Security Overview White Paper» offenbart. Ferner beschreibt technische Mitteilung "RSA laboratories technical note: Cryptographic message syntax standard, version 1.5", XP002952160, eine Syntax für Daten, für die Verschlüsselung angewendet werden kann, sowie digitale Signaturen und digitale Umschlage. MELEK ÖNEN ET AL: "Secure Data Aggregation with Multiple Encryption", 29. Januar 2007 (2007-01-29), WIRELESS SENSOR NETWORKS; [LECTURE NOTES IN COMPUTER SCIENCE;;LNCS], SPRINGER BERLIN HEIDELBERG, BERLIN, HEIDELBERG, PAGE(S) 117 - 132, XP019076931, beschreibt Datenaggregation unter Einsatz mehrfacher Verschlüsselung.

### Darstellung der Erfindung

Aufgabe der Erfindung ist es, eine Messinfrastruktur bereitzustellen, die besonders hohen Sicherheitsanforderungen genügt. Diese und andere Aufgaben werden gelöst durch eine erfindungsgemässe Messinfrastruktur gemäss Anspruch 1.

Die überraschend einfache erfindungsgemässe Lösung hat den Vorteil, dass Sicherheitsnachrichten in einer nicht interpretierten und somit ohne entsprechenden Sicherheitsschlüssel unzugänglichen Form von der Datensammelvorrichtung gehandhabt werden. Selbst bei einem unbefugten Zugriff auf die Datensammelvorrichtung wären die Sicherheitsnachrichten weiterhin verschlüsselt und ihr Inhalt ist Unbefugten nicht ohne Weiteres zugänglich. Somit entspricht eine erfindungsgemässe Handhabung von Sicherheitsnachrichten hohen Sicherheitsstandards an einen Austausch sensibler Daten innerhalb der Messinfrastruktur.

Indem die Sicherheitsvorrichtung nicht zur Interpretation der Sicherheitsnachrichten befähigt ist, kann sie bei unbefugtem Zugriff nicht zur Interpretation der Sicherheitsnachrichten manipuliert werden. Mittel zur Interpretation der Sicherheitsnachricht stehen bei der Datensammelvorrichtung für sich genommen nicht zur Verfügung.

Durch die Einbettung der Sicherheitsnachrichten in die Betriebsnachrichten kann die Datensammelvorrichtung Betriebsnachrichten gemäss entsprechenden Spezifikationen verarbeiten und somit zugleich die Sicherheitsnachrichten handhaben. Die eingebetteten Sicherheitsnachrichten können somit automatisch bzw. in einem Zug mit den Betriebsnachrichten entsprechend der jeweiligen Spezifikationen behandelt werden. Beispielsweise kann ein Dateikopf der Betriebsnachricht dazu verwendet werden, die Betriebsnachrichten spezifikations- und bestimmungsgemäss zu behandeln, wobei ein Datenteil der Betriebsnachricht die Sicherheitsnachricht beinhalten kann.

Die Datensammelvorrichtung umfasst einen Betriebspeicherbereich zum Abspeichern der Betriebsnachrichten und einen Sicherheitsspeicherbereich. Durch eine Trennung von Betriebsspeicherbereich und Sicherheitsspeicherbereich können diese unterschiedlichen Sicherheitsanforderungen gemäss ausgestaltet sein. Der Sicherheitsspeicherbereich ist mit aufwändigeren Sicherheitsmassnahmen ausgestattet als der Betriebsspeicherbereich. Somit ist der Sicherheitsspeicherbereich besser vor unbefugtem Zugriff geschützt als der Betriebsspeicherbereich.

Der Sicherheitsspeicherbereich ist nicht dazu ausgestaltet, Sicherheitsnachrichten abzuspeichern. Somit kann von vornherein verhindert werden, dass Sicherheitsnachrichten womöglich interpretiert bzw. unverschlüsselt im Sicherheitsspeicherbereich abgelegt werden. Die Sicherheitsnachrichten werden also lediglich im Betriebsspeicherbereich zwischengespeichert bzw. gepuffert. Eine Abspeicherung bzw. ein Abspeichern und Weiterleiten ("store and forward") der Sicherheitsnachrichten findet nicht statt. Der Sicherheitsbereich selber kann selbstverständlich durch den jeweiligen Anforderungen entsprechende Sicherheitsmassnahmen vor unbefugtem Zugriff geschützt sein.

Die Betriebsverschlüsselungsschicht der Betriebsnachricht umgibt die Sicherheitsverschlüsselungsschicht der Sicherheitsnachricht. Wie schon oben erwähnt, ist die Sicherheitsnachricht in die Betriebsnachricht eingebettet. Somit besteht eine Art hybrider bzw. doppelter Schutz der in der Sicherheitsnachricht enthaltenen Informationen, da zu deren Interpretation sowohl ein passender Betriebsschlüssel als auch ein passender Sicherheitsschlüssel vorliegen müssen.

Das Datenverwaltungsmodul ist im Normalmodus dazu ausgestaltet, die Betriebsverschlüsselungsschicht der Betriebsnachrichten zu entschlüsseln. Ein dazu erforderlicher Betriebsschlüssel ist in der Datensammelvorrichtung hinterlegt. Somit hat die Datensammelvorrichtung vollen Zugriff auf die Betriebsnachrichten. Die Betriebsverschlüsselungsschicht kann einen Betriebsdatenteil der Betriebsdaten umgeben. Der Betriebsdatenteil kann den Dateikopf und Datenteil der Betriebsnachricht umfassen.

Ein Speicherplatzbedarf der Sicherheitsnachrichten übersteigt einen im Sicherheitsspeicherbereich verfügbaren Speicherplatz. Der Speicherplatz im Sicherheitsspeicherbereich ist also so klein bemessen, dass keine Sicherheitsnachricht darin Platz findet und daher nicht abgespeichert werden kann. Der Sicherheitsspeicherbereich kann durch seine Minimierung besonders wirtschaftlich bereitgestellt werden.

Das Datenverwaltungsmodul ist im Sicherheitsmodus nicht dazu in der Lage, die Sicherheitsverschlüsselungsschicht der Sicherheitsnachrichten zu entschlüsseln. Somit kann das Datenverwaltungsmodul bei unbefugtem Zugriff nicht derart manipuliert werden, dass es die Sicherheitsverschlüsselungsschicht entschlüsselt. Ein dazu erforderlicher Sicherheitsschlüssel ist der Datensammelvorrichtung unbekannt bzw. darin nicht hinterlegt.

Die Sicherheitsnachricht umfasst einen Sicherheitsnachrichtenteil, der durch die Sicherheitsverschlüsselungsschicht geschützt ist.

Gemäss einer Ausführungsform kann die Sicherheitsnachricht in einen Betriebsinformationsteil der Betriebsnachricht eingebettet sein.

Gemäss der Erfindung verfügt das Datenverwaltungsmodul der Datensammelvorrichtung über keinen Sicherheitsschlüssel zum Entschlüsseln der Sicherheitsnachrichten. Somit kann der Sicherheitsschlüssel bei unbefugtem Zugriff auf die Datensammelvorrichtung nicht entwendet bzw. auf unberechtigte Art und Weise in Besitz genommen werden. Von der Datensammelvorrichtung gehandhabte Sicherheitsnachrichten können von der Datensammelvorrichtung selber nicht entschlüsselt und daher auch nicht geöffnet werden.

Es werden mit einem Betriebsschlüssel im Datenverwaltungsmodul die Betriebsnachricht entschlüsselt und mit dem Betriebsschlüssel und einem Sicherheitsschlüssel im Kopfendsystem und/oder in wenigstens einem der Endgeräte die Betriebsnachricht bzw. die Sicherheitsnachricht entschlüsselt. Kopfendgeräte und Endgeräte können also über sowohl einen Betriebsschlüssel als auch über einen Sicherheitsschlüssel verfügen. Sie sind zur doppelten Verschlüsselung fähig, wobei es sich bei mindestens einer der beiden Verschlüsselungen um eine daher End-zu-End-Verschlüsselung handeln kann.

### Kurze Beschreibung der Zeichnungen

Zum Verständnis der vorliegenden Erfindung wird nachfolgend auf die Zeichnungen Bezug genommen. Diese zeigen lediglich Ausführungsbeispiele des Erfindungsgegenstands.
Figur 1 : zeigt ein schematisches Blockdiagramm einer Datensammelvorrichtung.
Figur 2 : zeigt ein schematisches Blockdiagramm einer erfindungsgemässen Messinfrastruktur.
Figur 3 : zeigt schematisch einen Versandt von Betriebsnachrichten zwischen Kopfendsystem und Datensammelvorrichtung einer erfindungsgemässen Messinfrastruktur.
Figur 4 : zeigt schematisch einen Versand von Betriebsnachrichten zwischen Datensammelvorrichtung und Endgerät einer erfindungsgemässen Messinfrastruktur.
Figur 5 : zeigt schematisch einen Versand von Sicherheitsnachrichten vom Kopfendsystem über die Datensammelvorrichtung zum Endgerät einer erfindungsgemässen Messinfrastruktur.
Figur 6 : zeigt schematisch einen Versand von Sicherheitsnachrichten vom Endgerät über die Datensammelvorrichtung an ein Kopfendsystem einer erfindungsgemässen Messinfrastruktur.

### Ausführung der Erfindung

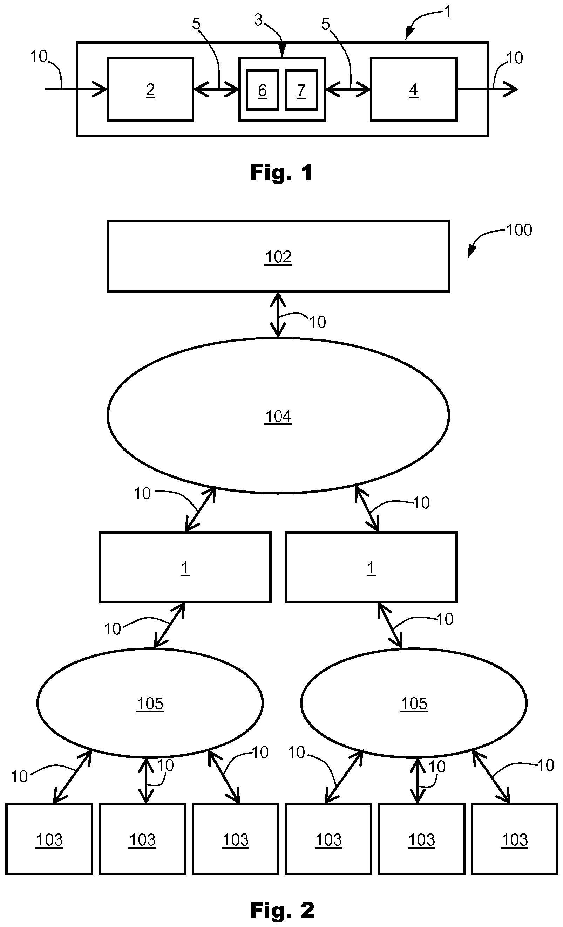

Figur 1 zeigt ein schematisches Blockdiagramm einer Datensammelvorrichtung 1. Die Datensammelvorrichtung 1 umfasst ein Datenempfangsmodul 2, ein Datenverwaltungsmodul 3 und ein Datensendemodul 4, die jeweils über interne Daten- und/oder Versorgungsleitungen 5 zur Daten- und/oder Energieversorgung miteinander verbunden sind. Des Weiteren verfügt das Datenverwaltungsmodul 3 über einen Betriebsspeicherbereich 6 und einen Sicherheitsspeicherbereich 7. Der Betriebsspeicherbereich 6 dient zur Ablage von Daten im Allgemeinen. Der Sicherheitsspeicherbereich dient zur Ablage von sensiblen Daten, die durch besondere Sicherungseinrichtungen vor unbefugtem Zugriff geschützt sind. Externe Daten- und/oder Versorgungsleitungen 10 dienen zur Kommunikation der Datensammelvorrichtung 1 innerhalb einer erfindungsgemässen Messinfrastruktur 100, die schematisch in Figur 2 dargestellt ist.

Die in Figur 2 gezeigte Messinfrastruktur 100 umfasst neben in der Regel einer Vielzahl von Datensammelvorrichtungen 1 ein Kopfendsystem 102 und eine Vielzahl von Endgeräten 103. Beim Kopfendsystem 102 handelt es sich beispielsweise um ein sogenanntes Head-End-System (HES) zum digitalen Fernauslesen der Endgeräte 103, bei denen es sich beispielsweise um Strom-, Gas-, Wasserzähler oder Ähnliches handeln kann. Die Endgeräte sind an jeweiligen Verbrauchsstellen installiert. Die Datensammelvorrichtungen 1 können als sogenannte Dataconcentrator (DC) ausgestaltet dazu dienen, durch Endgeräte gesammelte Daten bei diesen abzufragen und die Daten auf Ihrem Weg zwischen dem Kopfendsystem 102 und den Endgeräten 103 zu konzentrieren.

Eine Kommunikation zwischen Kopfendsystem 102 und Datensammelvorrichtung 1 geschieht in der Regel über ein Grossraumnetzwerk 104, auch genannt Wide Area Network (WAN) mit dem das Kopfendsystem 102 und die Datensammelvorrichtung 1 überjeweilige externe Daten- und/oder Versorgungsleitungen 10 verbunden sind. Dabei ist in der Regel das Kopfendsystem 102 als Client und die Datensammelvorrichtung als Server eingerichtet. Eine Kommunikation zwischen den Datensammelvorrichtungen 1 und den Endgeräten 103 geschieht üblicher Weise über eine Netzwerkumgebung 105, mit der diese ebenfalls über jeweilige externe Daten- und/oder Versorgungsleitungen 10 verbunden sind.

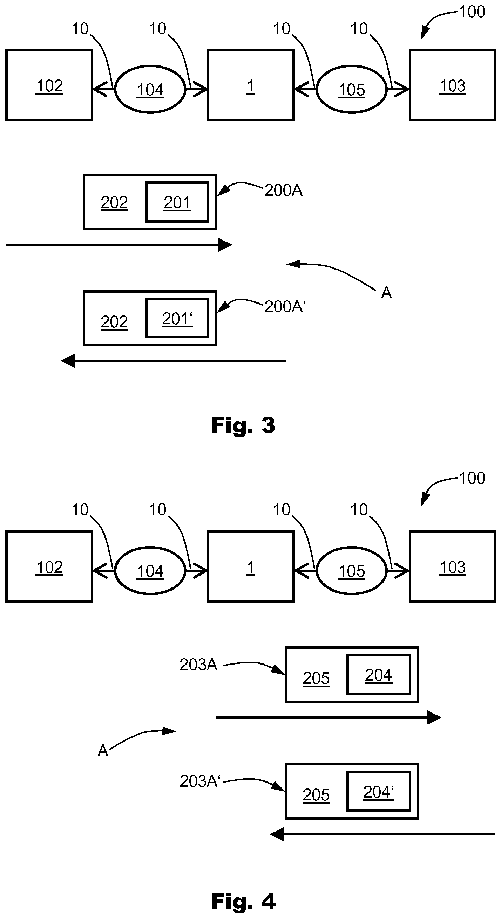

In den Figuren 3 und 4 ist die Kommunikation zwischen Kopfendsystem 102 und Endgeräten 103 in einem Normalmodus A gezeigt. Im Normalmodus A sammelt die Datensammelvorrichtung 1 Daten von den Endgeräten 103 und speichert die Daten unabhängig von einer Verbindung zum Kopfendsystem 102. Die Datensammelvorrichtung 1 sendet gemäss eines in einem Kommunikationszeitplan festgehaltenen vorbestimmten Ablaufes unabhängig vom Kopfendsystem 102 Befehle an die Endgeräte 103.

Diese Unabhängigkeit von der Verbindung mit dem Kopfendsystem 102 ist insbesondere von Vorteil, wenn aus ökonomischen und/oder technischen Gründen eine Kommunikation über das Grossraumnetzwerk 104 nicht ununterbrochen zur Verfügung steht. Die Datensammelvorrichtung 1 führt ihre Kommunikationsaufgaben über die Netzwerkumgebung 105 auch während Zeiten durch, zu denen eine Kommunikation über das Grossraumnetzwerk 104 nicht unmittelbar besteht. Wenn das Grossraumnetzwerk 104 zur Verfügung steht, dann werden die von der Datensammelvorrichtung 1 gesammelten Daten an das Kopfendsystem 102 übertragen und dieses kann Konfigurationsaufgaben durchführen, wie beispielsweise dem Endgeräten 103 Kommunikationszeitpläne vorgeben oder Programmaktualisierungen durchführen.

Figur 3 zeigt schematisch eine Kommunikation zwischen Kopfendsystem 102 und Datensammelvorrichtung 1. Die Kommunikation zwischen Kopfendsystem 102 und Datensammelvorrichtung 1 erfolgt in einem Normalmodus A mittels Betriebsnachrichten 200A. Die Betriebsnachrichten 200A umfassen jeweils einen Betriebsinformationsteil 201 und eine Betriebsverschlüsselungsschicht 202, um die Kommunikation zwischen Kopfendsystem 102, Datensammelvorrichtung 1 und Endgerät 103 im Normalmodus A vor unbefugtem Zugriff zu sichern. Der Betriebsinformationsteil 201 ist sozusagen in die Betriebsverschlüsselungsschicht 202 eingebetet.

Der Betriebsinformationsteil 201 wird beispielsweise im Kopfendsystem 102 bereitgestellt und die Betriebsnachricht 200A erstellt, in dem der Betriebsinformationsteil 201 mit Hilfe eines im Kopfendsystems 102 zur Verfügung stehenden Betriebsschlüssel verschlüsselt wird. Nach dem Versenden an die Datensammelvorrichtung 1 kann diese den Betriebsnachrichtenteil 201 mit Hilfe des ebenfalls ihr bekannten Betriebsschlüssels entschlüsseln und somit verarbeiten bzw. interpretieren. In umgekehrter Richtung beim Versenden von der Datensammelvorrichtung 1 an das Kopfendsystem 102 wird ein in der Datensammelvorrichtung 1 erzeugter Betriebsinformationsteil 201' mit dem entsprechenden Betriebsschlüssel mit der Betriebsverschlüsselungsschicht 202 versehen und als Betriebsnachricht 200A' an das Kopfendsystem 102 geschickt. Im Kopfendsystem 102 kann der Betriebsinformationsteil 201' der Datensammelvorrichtung 1 wiederum durch den Betriebsschlüssel entschlüsselt und der Betriebsinformationsteil 201' interpretiert werden.

Figur 4 zeigt schematisch eine Kommunikation mittels weiterer Betriebsnachrichten 203A zwischen der Datensammelvorrichtung 1 und dem Endgerät 103. Eine weitere Betriebsnachricht 203A wird von der Datensammelvorrichtung 1 erzeugt, indem diese einen weiteren Betriebsinformationsteil 204 mittels eines entsprechenden weiteren Betriebsschlüssels verschlüsselt und somit eine in eine weitere Betriebsverschlüsselungsschicht 205 einbetet. Die weitere Betriebsnachricht 203A wird von der Datensammelvorrichtung 1 an das Endgerät 103 gesendet, welches über den entsprechenden weiteren Betriebsschlüssel verfügt und nach dem entschlüsseln der weiteren Betriebsverschlüsselungsschicht 205 den weiteren Betriebsinformationsteil 204 interpretieren kann.

Auf analoge Art und Weise werden auf umgekehrtem Weg im Endgerät 103 weitere Betriebsnachrichten 203A' erzeugt, indem Betriebsnachrichtenteile 204' mittels des weiteren Betriebsschlüssels verschlüsselt und somit mit einer weiteren Betriebsverschlüsselungsschicht 205 versehen werden. Die an die Datensammelvorrichtung 1 geschickten weiteren Betriebsnachrichten 203A' werden von der Datensammelvorrichtung 1 mittels des weiteren Betriebsschlüssels entschlüsselt. Somit kann die Datensammelvorrichtung 1 die von den Endgeräten 103 versendeten weiteren Betriebsnachrichten 203A' öffnen und den darin enthaltenen weiteren Betriebsinformationsteil 204' interpretieren.

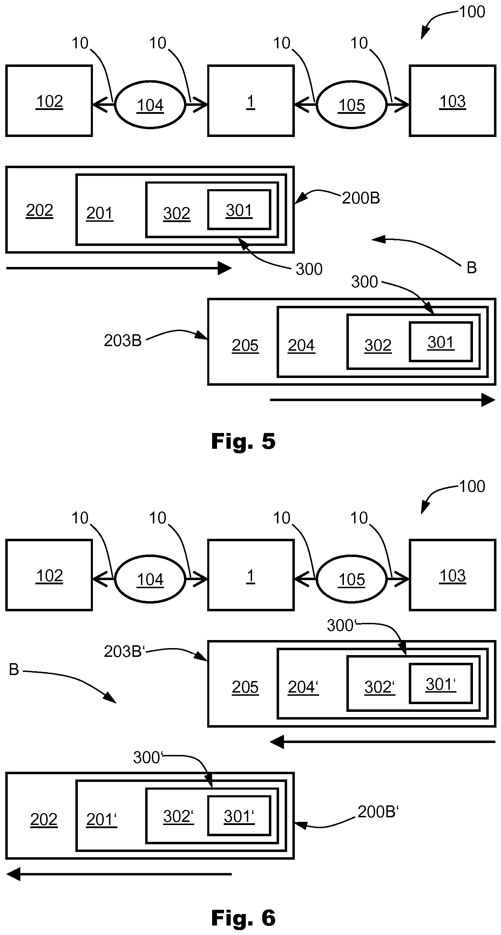

In den Figuren 5 und 6 ist eine Kommunikation zwischen Kopfendsystem 102 und Endgeräten 103 über die Datensammelvorrichtungen 1 in einem Sicherheitsmodus B gezeigt. Der Sicherheitsmodus B kann dazu verwendet werden, um hochsensible Daten bzw. höchst kritische Befehle zwischen dem Kopfendsystem 102 und den Endgeräten 103 auszutauschen.

Figur 5 zeigt schematisch eine Versendung von Sicherheitsnachrichten 300 vom Kopfendsystem 102 über die Datensammelvorrichtung 1 an das Endgerät 103. Die Sicherheitsnachrichten 300 umfassen einen Sicherheitsnachrichtenteil 301, der durch eine Sicherheitsverschlüsselungsschicht 302 besonders geschützt ist, die mit Hilfe eines entsprechenden Sicherheitsschlüssels erzeugt ist. Der Sicherheitsschlüssel liegt im Kopfendsystem 102 und im Endgerät 103 vor, um dort die Sicherheitsnachricht 300 zu ver- bzw. entschlüsseln.

Zum Versenden der Sicherheitsnachrichten 300 vom Kopfendsystem 102 an die Datensammelvorrichtung 1 wird die Sicherheitsnachricht 300 in einen Betriebsinformationsteil 201 eingebettet, der im Kopfendsystem 102 durch den Betriebsschlüssel mit der Betriebsverschlüsselungsschicht 202 versehen wird. Somit ist eine besondere Betriebsnachricht 200B für den Sicherheitsmodus B gebildet. Die besondere Betriebsnachricht 200B wird an die Datensammelvorrichtung 1 gesendet.

In der Datensammelvorrichtung 1 wird die Betriebsverschlüsselungsschicht 202 ähnlich wie im Normalmodus A entschlüsselt und zumindest der Betriebsinformationsteil 201 ist durch die Datensammelvorrichtung interpretierbar, wobei es sich beim interpretierbaren Anteil des Betriebsinformationsteils 201 beispielsweise um einen Dateikopf handeln kann. Die in dem Betriebsinformationsteil 201 eingebettete Sicherheitsnachricht 300 ist jedoch von der Datensammelvorrichtung 1 nicht interpretierbar, weil diese nicht über den Sicherheitsschlüssel zum Entschlüsseln der Sicherheitsverschlüsselungsschicht 302 verfügt.

Somit kann die Datensammelvorrichtung 1 nicht auf den Sicherheitsinformationsteil 301 zugreifen bzw. diese nicht interpretieren. Daher belässt die Datensammelvorrichtung 1 die Sicherheitsnachricht 300 sozusagen unangetastet und legt diese nicht im Sicherheitsspeicherbereich 7 von aussen zugänglich ab. Ein Speicherplatz des Sicherheitsspeicherbereiches 7 kann also so bemessen werden, dass er kleiner ist, als zur Aufnahme des entschlüsselten Sicherheitsinformationsteils 301 notwendig wäre. Die Sicherheitsnachricht 300 kann verschlüsselt im Betriebsspeicherbereich 6 verbleiben, ohne dass sie durch Unbefugte interpretiert werden könnte bzw. ohne dass der Betriebspeicherbereich 6 einen speziellen Zugriffschutz wie der Sicherheitsspeicherbereich benötigte, weil die Sicherheitsnachricht 300 weiterhin in verschlüsselter Form vorliegt und eine zum entschlüsseln der Sicherheitsnachricht 300 bzw. deren Sicherheitsverschlüsselungsschicht 302 notwendiger Sicherheitsschlüssel nur dem Kopfendsystem 102 und dem Endgerät 103 zur Verfügung steht. Daher besteht bei der Kommunikation im Sicherheitsmodus B eine End-zu-End-Verschlüsselung zwischen Kopfendsystem 102 und Endgerät 103.

Zum Versenden der Sicherheitsnachricht 300 von der Datensammelvorrichtung 1 an das Endgerät 103 erzeugt die Datensammelvorrichtung 1 wiederum den weiteren Betriebsinformationsteil 204, in den die Sicherheitsnachricht 300 eingebettet ist. Der weitere Betriebsinformationsteil 204 wird wiederum mit Hilfe der weiteren Betriebsverschlüsselungsschicht 205 durch einen entsprechenden weiteren Betriebsschlüssel von der Datensammelvorrichtung 1 verschlüsselt und in Form einer weiteren besonderen Betriebsnachricht 203B von der Datensammelvorrichtung 1 an das Endgerät 103 versendet.

Das Endgerät 103 entschlüsselt zunächst die weitere besondere Betriebsnachricht 203B, indem es mittels seines entsprechenden Betriebsschlüssels die weitere Betriebsverschlüsselungsschicht 205 entschlüsselt. Somit hat es Zugriff auf den weiteren Betriebsinformationsteil 204. Darüber hinaus verfügt das Endgerät 103 über den Sicherheitsschlüssel, der es ihm erlaubt, die Sicherheitsverschlüsselungsschicht 302 zu entschlüsseln und dadurch auf den Sicherheitsnachrichtenteil 301 zuzugreifen, um diesen zu interpretieren.

Figur 6 zeigt schematisch einen Versandt einer Sicherheitsnachricht 300' vom Endgerät 103 über die Datensammelvorrichtung 1 an das Kopfendsystem 102 im Sicherheitsmodus B. Auf analoge Art und Weise wie beim in Figur 5 dargestellten Versandt wird im Endgerät 103 ein Sicherheitsnachrichtenteil 301' erstellt und mittels eines entsprechenden Sicherheitsschlüssels mit einer Sicherheitsverschlüsselungsschicht 302' versehen. Die auf diesem Wege gebildete Sicherheitsnachricht 300' wird wiederum in einen weiteren Betriebsinformationsteil 204 eingebettet, der mittels eines entsprechenden weiteren Betriebsschlüssels mit der weiteren Betriebsverschlüsselungsschicht 205 versehen wird.

Somit wird eine weitere besondere Betriebsnachricht 203B' erzeugt, in welche die Sicherheitsnachricht 300' eingebettet ist. Die weitere besondere Betriebsnachricht 203B' wird an die Datensammelvorrichtung 1 gesendet.

In der Datensammelvorrichtung 1 wird die weitere Betriebsverschlüsselungsschicht 205 mittels eines entsprechenden Betriebsschlüssels entschlüsselt und somit kann der weitere Betriebsinformationsteil 204' interpretiert werden, in den die Sicherheitsnachricht 300' eingebettet ist. Abermals verfügt die Datensammelvorrichtung 1 nicht über den entsprechenden Sicherheitsschlüssel zum Entschlüsseln der Sicherheitsverschlüsselungsschicht 302' und kann somit den Sicherheitsnachrichtenteil 301' nicht interpretieren. Zum Weiterleiten der Sicherheitsnachricht 300' an das Kopfendsystem 102 erzeugt die Datensammelvorrichtung 1 einen die Sicherheitsnachricht 300' enthaltenen Betriebsinformationsteil 201', der durch einen entsprechenden Betriebsschlüssel mit der Betriebsverschlüsselungsschicht 202 versehen und somit als besondere Betriebsnachricht 200B' im Sicherheitsmodus B an das Kopfendsystem 102 versendet wird.

Das Kopfendsystem 102 verwendet wiederum den Betriebsschlüssel, um die Betriebsverschlüsselungsschicht 202 zu entschlüsseln und somit den Betriebsinformationsteil 201' interpretieren zu können. Um auf die im Betriebsinformationsteil 201' enthaltene Sicherheitsnachricht 300' zuzugreifen, entschlüsselt das Kopfendsystem 102 die Sicherheitsverschlüsselungsschicht 302' mittels des entsprechenden Sicherheitsschlüssels und kann dann auf den Sicherheitsnachrichtenteil 301' zugreifen und diesen interpretieren.

Abweichungen von den oben beschriebenen Ausführungsformen sind im Rahmen des Erfindungsgedankens möglich. So kann eine Datensammelvorrichtung 1 den jeweiligen Anforderungen gemäss mit einer beliebigen Anzahl von Datenempfangsmodulen 2, Datenverwaltungsmodulen 3 und Datensendemodulen 4 versehen sein, die über interne Daten- und/oder Versorgungsleitungen 5 miteinander verbunden sein und Betriebsspeicherbereiche 6 sowie Sicherheitsspeicherbereiche 7 aufweisen können, um den jeweiligen Anforderungen gemäss Betriebsnachrichten 200A, 200A', 200B, 200B', 203A, 203A', 203B, 203B' über externe Daten- und/oder Versorgungsleitungen 10 zu senden sowie zu empfangen. Des Weiteren kann die Datensammelvorrichtung 1 über Ein- und Ausgabegeräte wie Bildschirme, Tastaturen, Laufwerke und Schnittstellen verfügen, um es den jeweiligen Anforderungen gemäss einer Bedienperson zu erlauben, mit der Datensammelvorrichtung 1 zu kommunizieren bzw. diese zu steuern.

Die Messinfrastruktur 100 kann den jeweiligen Anforderungen gemäss eine beliebige Anzahl von Datensammelvorrichtungen 1, Kopfendsystemen 102 und Endgeräten 103 umfassen, die den jeweiligen Anforderungen gemäss über Grossraumnetzwerke 104 und/oder Netzwerkumgebungen 105 daten- und/oder energieübertragend miteinander verbunden sein können, um Betriebsnachrichten 200A, 200A', 200B, 200B', 203A, 203A', 203B, 203B' untereinander auszutauschen. Interne Daten- und/oder Versorgungsleitungen 5 und externe Daten- und/oder Versorgungsleitungen 10 können den jeweiligen Anforderungen beliebige leitungsgebundene und leitungslose Verbindung, wie Funkverbindungen und entsprechende Umsetzer, Adapter und jegliches Zubehör umfassen, um einen Daten- und/oder Energietransport zu ermöglichen.

Die Betriebesnachrichten 200A, 200A', 200B, 200B', 203A, 203A', 203B, 203B' können den jeweiligen Anforderungen gemäss eine beliebige Anzahl von Betriebsinformationsteilen 201, 201' beinhalten, die durch entsprechende Betriebsverschlüsselungsschichten 202, 205 im Normalmodus A sowie im Sicherheitsmodus B verschlüsselt sind. Die Sicherheitsnachrichten 300, 300' können den jeweiligen Anforderungen gemäss eine beliebige Anzahl von Sicherheitsnachrichtenteilen 301, 300' umfassen, die mit jeweiligen Sicherheitsverschlüsselungsschichten 302, 302' versehen und entsprechend in besondere Betriebsnachrichten 203B, 203B' eingebettet sein können.

### Bezugszeichenliste

1 Datensammelvorrichtung
2 Datenempfangsmodul
3 Datenverwaltungsmodul
4 Datensendemodul
5 Interne Daten- und/oder Versorgungsleitung
6 Betriebsspeicherbereich
7 Sicherheitsspeicherbereich
10 Externe Daten- und/oder Versorgungsleitung
100 Messinfrastruktur
102 Kopfendsystem
103 Endgerät
104 Grossraumnetzwerk
105 Netzwerkumgebung
200A, 200A' Betriebsnachricht
200B, 200B' besondere Betriebsnachricht
201, 201' Betriebsinformationsteil
202 Betriebsverschlüsselungsschicht
203A, 203A weitere Betriebsnachricht
203B, 203B' weitere besondere Betriebsnachricht
204, 204' weiterer Betriebsinformationsteil
205 weitere Betriebsverschlüsselungsschicht
300, 300' Sicherheitsnachricht
301, 301' Sicherheitsinformationsteil
302, 302' Sicherheitsverschlüsselungsschicht
A Normalmodus / Normalbetriebsart
B Sicherheitsmodus / Sicherheitsbetriebsart

## Patentansprüche

1. Messinfrastruktur (100), insbesondere intelligente Messinfrastruktur (100) zum Sammeln von durch eine Vielzahl von Endgeräten (103) generierten Messdaten mit wenigstens einer Datensammelvorrichtung (1), die als Datenkonzentrator konfiguriert ist, und wenigstens einem Kopfendsystem (102),
wobei die Messinfrastruktur (100) die Vielzahl von Endgeräten (103), die wenigstens eine Datensammelvorrichtung (1) und das wenigstens eine Kopfendsystem (102) umfasst,
wobei die Endgeräte (103), die wenigstens eine Datensammelvorrichtung (1) und das wenigstens eine Kopfendsystem (102) dazu ausgebildet sind, durch Betriebsnachrichten (200A, 200A', 200B, 200B', 203A, 203A', 203B, 203B') über die wenigstens eine Datensammelvorrichtung (1) miteinander zu kommunizieren, und die wenigstens eine Datensammelvorrichtung ein Datenverwaltungsmodul (3) umfasst, das in einem Normalmodus (A) vom Kopfendsystem und/oder von Endgeräten gesendete Betriebsnachrichten (200A, 200A', 200B, 200B', 203A, 203A', 203B, 203B') interpretiert,
wobei das Datenverwaltungsmodul (3) dazu ausgebildet ist, in einem Sicherheitsmodus (B) vom Kopfendsystem (102) und/oder von Endgeräten (103) gesendete Sicherheitsnachrichten (300, 300') uninterpretiert zu belassen, die Sicherheitsnachrichten (300, 300') umfassen einen Sicherungsnachrichtenteil (301, 301'), der durch eine Sicherheitsverschlüsselungsschicht (302, 302') geschützt ist, die mit Hilfe eines entsprechenden Sicherheitsschlüssels, der im Kopfendsystem (102) und Endgerät (103) vorliegt, erzeugt ist, wobei die Datensammelvorrichtung (1) nicht über den Sicherheitsschlüssel zum Entschlüsseln der Sicherheitsverschlüsslungsschicht (302, 302') verfügt,
wobei die Sicherheitsnachrichten (300, 300') in die Betriebsnachrichten (200A, 200A', 200B, 200B', 203A, 203A', 203B, 203B') eingebettet sind, und
eine Betriebsverschlüsslungsschicht (202, 205) der Betriebsnachricht (200A, 200A', 200B, 200B', 203A, 203A', 203B, 203B') die Sicherheitsverschlüsselungsschicht (302, 302') der Sicherheitsnachricht (300, 300') umgibt, wobei das Datenverwaltungsmodul (3) dazu ausgestaltet ist, im Normalmodus eine Betriebsverschlüsselungsschicht der Betriebsnachrichten mithilfe eines in der Datensammelvorrichtung (1) hinterlegten Betriebsschlüssel zu entschlüsseln,
wobei die Datensammelvorrichtung (1) einen Betriebspeicherbereich (6) zum Abspeichern der Betriebsnachrichten (200A, 200A', 200B, 200B', 203A, 203A', 203B, 203B') umfasst, **dadurch gekennzeichnet, dass** die Datensammelvorrichtung (1) einen Sicherheitsspeicherbereich (7) umfasst, der mit aufwändigeren Sicherheitsmaßnahmen als der Betriebsspeicherbereich zum Schutz vor unbefugten Zugriff ausgestattet ist, wobei der Sicherheitsspeicherbereich (7) nicht zum Speichern unverschlüsselter Sicherheitsnachrichten ausgestaltet ist, und wobei die Datensammelvorrichtung (1) dazu ausgestaltet ist, um die verschlüsselten Sicherheitsnachrichten lediglich in dem Betriebspeicherbereich (6) zwischenzuspeichern bzw. zu puffern, wobei eine Abspeicherung der Sicherheitsnachrichten nicht stattfindet, und wobei ein Speicherplatz des Sicherheitsspeicherbereiches (7) so bemessen ist, dass die Sicherheitsnachrichten nicht in dem Speicherplatz gespeichert werden können.

## Claims

1. A measurement infrastructure (100), in particular intelligent measurement infrastructure (100), for collecting measurement data generated by a plurality of terminals (103) having at least one data collection apparatus (1) which is configured as a data concentrator, and at least one head-end system (102),
wherein the measurement infrastructure (100) comprises the plurality of terminals (103), the at least one data collection apparatus (1) and the at least one head-end system (102),
wherein the terminals (103), the at least one data collection apparatus (1) and the at least one head-end system (102) are designed to communicate with each other by means of operation messages (200A, 200A', 200B, 200B', 203A, 203A', 203B, 203B') via the at least one data collection apparatus (1) and the at least one data collection apparatus comprises a data management module (3) which, in a normal mode (A), interprets operation messages (200A, 200A', 200B, 200B', 203A, 203A', 203B, 203B') transmitted by the head-end system and/or terminals,
wherein the data management module (3) is designed to leave security messages (300, 300') transmitted from the head-end system (102) and/or terminals (103) in an uninterpreted state in a security mode (B), the security messages (300, 300') comprise a securing message portion (301, 301') which is protected by means of a security encryption layer (302, 302'), which is produced by means of a corresponding security key which is present in the head-end system (102) and terminal (103), wherein the data collection apparatus (1) does not have the security key for decrypting the security encryption layer (302, 302'),
wherein the security messages (300, 300') are embedded in the operation messages (200A, 200A', 200B, 200B', 203A, 203A', 203B, 203B') and,
an operating encryption layer (202, 205) of the operation message (200A, 200A', 200B, 200B', 203A, 203A', 203B, 203B') surrounds the security encryption layer (302, 302') of the security message (300, 300'), wherein the data management module (3) is designed, in normal mode, to decrypt an operating encryption layer of the operating messages by means of an operating key which is stored in the data collection apparatus (1),
wherein the data collection apparatus (1) comprises an operating storage region (6) for storing the operation messages (200A, 200A', 200B, 200B', 203A, 203A', 203B, 203B'), **characterised in that** the data collection apparatus (1) comprises a security storage region (7), which is provided with more complex security measures than the operating storage region for protection from unauthorised access, wherein the security storage region (7) is not designed to store non-encrypted security messages, and wherein the data collection apparatus (1) is configured to temporarily store or buffer the encrypted security messages only in the operating storage region (6), wherein storage of the security messages does not take place, and wherein a storage space of the security storage region (7) is sized in such a manner that the security messages cannot be stored in the storage space.

## Revendications

1. Infrastructure de mesure (100), particulièrement infrastructure de mesure (100) intelligente pour collecter des données de mesure générées par une pluralité de terminaux (103) avec au moins un appareil de collecte de données (1), configuré en tant que concentrateur de données, et au moins un système de tête de réseau (102),
où l'infrastructure de mesure (100) comprend la pluralité de terminaux (103), l'au moins un appareil de collecte de données (1) et l'au moins un système de tête de réseau (102),
dans laquelle les terminaux (103), l'au moins un appareil de collecte de données (1) et l'au moins un système de tête de réseau (102) sont conçus pour communiquer entre eux par messages opérationnels (200A, 200A', 200B, 200B', 203A, 203A', 203B, 203B') *via* l'au moins un appareil de collecte de données (1) et l'au moins un appareil de collecte de données comprend un module de gestion de données (3), qui interprète dans un mode normal (A) des messages opérationnels (200A, 200A', 200B, 200B', 203A, 203A', 203B, 203B') envoyés par le système de tête de réseau et/ou les terminaux,
dans laquelle le module de gestion de données (3) est conçu pour laisser, dans un mode sécurisé (B), des messages de sécurité (300, 300') envoyés par le système de tête de réseau (102) et/ou des terminaux (103) dans un état non-interprété, les messages de sécurité (300, 300') comprennent une partie de message de sécurisation (301, 301') qui est protégée par une couche de chiffrement de sécurité (302, 302') générée à l'aide d'une clé de sécurité correspondante, présente dans le système de tête de réseau (102) et le terminal (103), le dispositif de collecte données (1) ne possédant pas de clé de sécurité pour le déchiffrement de la couche de chiffrement de sécurité (302, 302'),
dans laquelle les messages de sécurité (300, 300') sont intégrés dans les messages opérationnels (200A, 200A', 200B, 200B', 203A, 203A', 203B, 203B'), et
une couche de chiffrement opérationnelle (202, 205) du message opérationnel (200A, 200A', 200B, 200B', 203A, 203A', 203B, 203B') entoure la couche de chiffrement de sécurité (302, 302') du message de sécurité (300, 300'), le module gestion de données (3) étant conçu pour déchiffrer, dans le mode normal, une couche de chiffrement opérationnel des messages opérationnels à l'aide d'une clé opérationnelle enregistrée dans le dispositif de collecte de données (1),
dans laquelle le dispositif de collecte de données (1) comprend une zone de stockage opérationnelle (6) pour sauvegarder les messages opérationnels (200A, 200A', 200B, 200B', 203A, 203A', 203B, 203B'), **caractérisé en ce que** le dispositif de collecte de données (1) comprend une zone de stockage de sécurité (7) qui est dotée de mesures de sécurité plus complexes que la zone de stockage opérationnelle pour la protection contre un accès non autorisé, dans laquelle la zone de stockage de sécurité (7) n'est pas conçue pour sauvegarder des messages de sécurité non chiffrés, et dans laquelle le dispositif de collecte de données (1) est développé pour sauvegarder temporairement ou mettre en mémoire tampon les messages de sécurité chiffrés uniquement dans la zone de stockage opérationnelle (6), où un stockage des messages de sécurité n'a pas lieu, et dans laquelle un espace de sauvegarde de la zone de stockage de sécurité (7) est dimensionné de telle sorte que les messages de sécurité ne peuvent pas être sauvegardés dans l'espace de stockage.
